# EUROPEAN PATENT SPECIFICATION

(11) **EP 4 637 280 B1**
(45) Date of publication and mention of the grant of the patent: **23.09.2026**
(21) Application number: 25165536.1
(22) Date of filing: 24.03.2025
(51) Int. Cl.: H05K 5/00, G06F 1/18

(54) **COMBINATION OF A CONTROL DEVICE FOR A DOOR SYSTEM AND A HOLDER FOR THE CONTROL DEVICE**
KOMBINATION EINER STEUERVORRICHTUNG FÜR EIN TÜRSYSTEM UND EINER HALTERUNG FÜR DIE STEUERVORRICHTUNG
COMBINAISON D'UN DISPOSITIF DE COMMANDE POUR UN SYSTÈME DE PORTE ET D'UN SUPPORT POUR LE DISPOSITIF DE COMMANDE

(30) Priority: 16.04.2024 NL 2037467
(43) Date of publication of application: 22.10.2025
(73) Proprietor: Condoor Group B.V., 3899 AA Zeewolde (NL)
(72) Inventor: OLDEN, Maarten Willem, 3899 AA Zeewolde (NL)
(74) Representative: van Breda, Jacobus

(56) References cited:
- CN-A- 103 259 205
- CN-U- 206 807 908
- CN-U- 214 752 016
- US-A1- 2012 140 382
- US-A1- 2013 127 590
- US-B1- 6 362 953

## Description

The invention relates to a combination of a control device for a door system and a holder for the control device.

A control device for a door system is known from practice, wherein said control device usually comprises a motherboard with a CPU and memory, wherein the memory is loaded with a computer program embodying a control algorithm for the door system. In many cases the motherboard is provided with a touchscreen to enable a maintenance engineer access to the CPU and memory for maintenance and for changing operational parameters of the computer program loaded therein. For practical reasons the known control device is kept in a holder for the control device near to the door system. A combination of a control device and a holder is shown by US 2012/140382 A1.

The combination of a control device for a door system and a holder for the control device according to the invention is proposed to meet competing requirements in terms of accessibility for the user and for the maintenance engineer of the door system. Obviously the user of the door system only requires status information concerning the door system as well as input means to operate the door system, whereas the maintenance engineer requires access to all parts of the system that may occasionally require maintenance or require updating of system parameters. It is an object of the invention to provide a combination of a control device and a holder for such control device which can meet the above purposes in a cost-effective and simple way. At the same time it is intended to achieve other advantages as may become apparent from the following disclosure. According to a first aspect of the invention the holder is provided with an openable and closable frontal closing plate having a window closed off with a transparent screen that prevents haptic access to the touchscreen yet enables visual access to the touchscreen showing user information pertaining to the door system when the frontal closing plate is closed, and that said frontal closing plate is provided with one or more push buttons enabling user control of the door system. With the combination of the holder and control device of the invention all user requirements can be met in case the frontal closing plate is closed without providing access to other features of the door system, whereas all requirements of a maintenance engineer, full access to all features of the door system can be met by simply opening the frontal closing plate.

It is desirable that the combination of the holder and the control device is suitable for placement on an arbitrary side with respect to the door system. This may involve that the frontal closing plate can be openable to the left or openable to the right. In order to achieve this objective it is preferable that the frontal closing plate has a hinge connection with a housing for the motherboard and touchscreen, which hinge connection comprises a bar with a vertical portion which connects to the housing and connects to upper and lower horizontal portions of said bar that are pivotably connected to the frontal closing plate at a side that faces the housing when the frontal closing plate is closed, so as to enable that the frontal closing plate can be turned to a distant position with respect to the vertical portion of the bar that connects to the housing when opening the frontal closing plate.

The above object to have the frontal closing plate easily openable to the left or to the right can be further promoted by arranging that the upper and lower horizontal portions are connected centrally to the side of the frontal closing plate that faces the housing when the frontal closing plate is closed. It is further desirable that the holder is equipped with one or more clips that are provided on the bar that are arranged with at least one notch to prevent rotation of the bar so as to maintain and secure an open position of the frontal closing plate when a maintenance engineer is working on the system. This is helpful in keeping the frontal closing plate open also in case the holder is not exactly vertical.

The smoothness of opening the frontal closing plate is supported by arranging that the vertical portion of the bar is rotatably connected to the housing for the motherboard and touchscreen, and in particular that the vertical portion of the bar is rotatably connected to a left side or to a right side of the housing for the motherboard and touchscreen.

Preferably the upper and lower horizontal portions of the bar each have two sections that are connected to each other through an angled section with a predefined angle. This enables that the opening angle of the frontal closing plate can be larger than in case the two sections are linked to each other in a straight line. Also the forces acting on the hinge of the frontal closing plate are reduced since the moment acting on the hinge construction is reduced because of the reduced arm-length of the angled sections.

It is found that optimum results can be achieved when the angle is between 139° and 141°.

It is further preferred that within the housing there is a circumferential seal around at least the motherboard, wherein in an area outside said seal connectors are provided for connecting the frontal closing plate to the holder. The effectiveness of the seal is thus improved.

The accompanying drawing, which is incorporated into and forms a part of the specification, illustrates one or more embodiments of the present invention and, together with the description, serves to explain the principles of the invention. The drawing is only for the purpose of illustrating one or more embodiments of the invention and is not to be construed as limiting the invention.

In the drawing:
- figure 1 depicts the combination of a holder and control device according to the invention with a frontal closing plate being opened;
- figure 2 depicts the combination of a holder and control device according to the invention with the frontal closing plate being closed; and
- figure 3 shows a detail of the bar for connecting the frontal closing plate to the holder, in particular a horizontal portion of said bar.

Whenever in the figures the same reference numerals are applied, these numerals refer to the same parts.

The figures show a combination of a control device for a door system and a holder for the control device in accordance with the invention. The door system can be any type of door system, i.e. a regular left turning or right turning access door or an overhead door. Since both type of doors are commonly known, there is no showing of such doors herein.

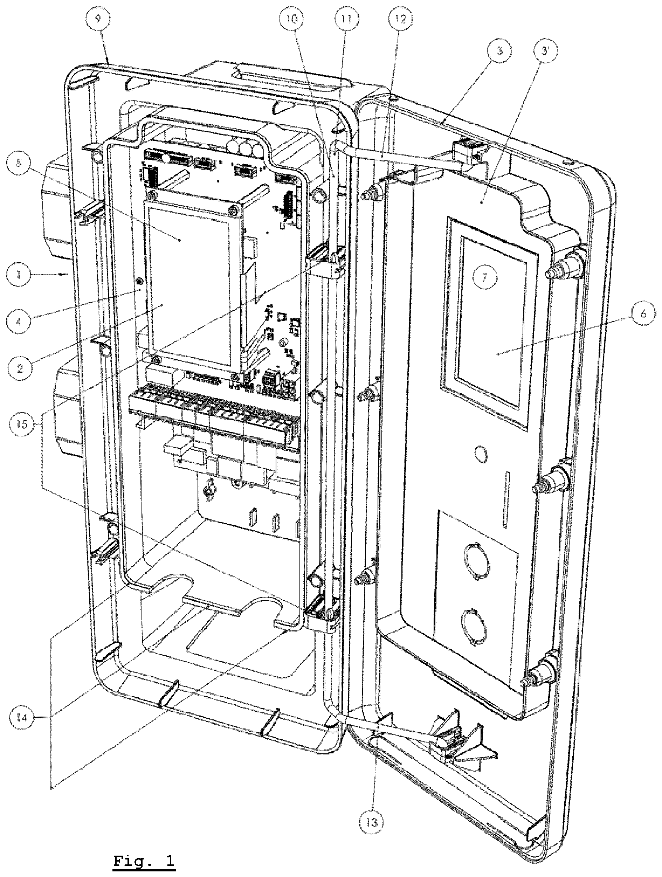

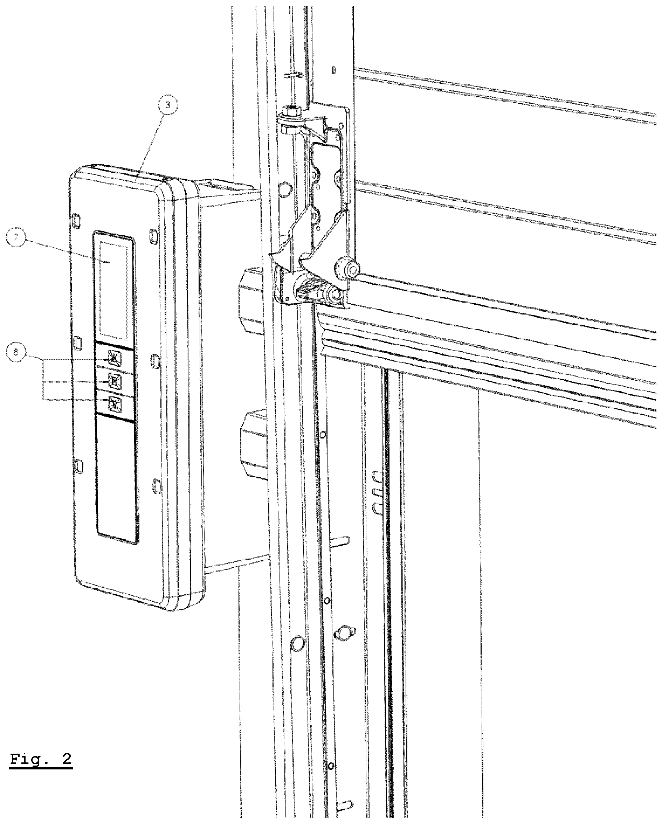

Figure 1 shows the holder 1 for the control device 2 with an open frontal closing plate 3, therewith obviously enabling a view at the control device 2. In figure 2 the frontal closing plate 3 is closed, which is the normal situation.

Figure 1 shows further that the control device 2 comprises a motherboard 4 which is as conventionally provided with a CPU and memory. The memory is loaded with a computer program embodying a control algorithm for the door system. It also shows that the motherboard 4 is provided with a touchscreen 5 to enable a maintenance engineer access to the CPU and memory for maintenance and for changing operational parameters of the computer program loaded therein.

Figure 1 also clearly shows that the openable and closable frontal closing plate 3 has a window 6. This window 6 is closed off with a transparent screen 7 that prevents haptic access to the touchscreen 5 when the frontal closing plate 3 is closed as shown in figure 2. The transparent screen 7 however then still enables visual access to the touchscreen 5 showing user information pertaining to the door system. It further shows that said frontal closing plate 3 is provided with one or more push buttons 8 enabling control of the door system.

Again with reference to figure 1 it shows that the frontal closing plate 3 has a hinge connection with a housing 9 for the motherboard 4 and touchscreen 5, which hinge connection comprises a bar 10 with a vertical portion 11 which connects to the housing 9 and connects to upper and lower horizontal portions 12, 13 of said bar 10 that are pivotably connected to the frontal closing plate 3 at a side 3' that faces the housing 9 when the frontal closing plate 3 is closed. This construction enables that the frontal closing plate 3 can be turned to a distant position with respect to the vertical portion 11 of the bar 10 that connects to the housing 9 when the frontal closing plate 3 is opened. This is indeed what is shown in figure 1.

Figure 1 further shows that the holder 1 is equipped with one or more clips 15 that are provided on the bar 10 that are arranged with at least one notch to prevent rotation of the bar 10 so as to maintain an open position of the frontal closing plate 3.

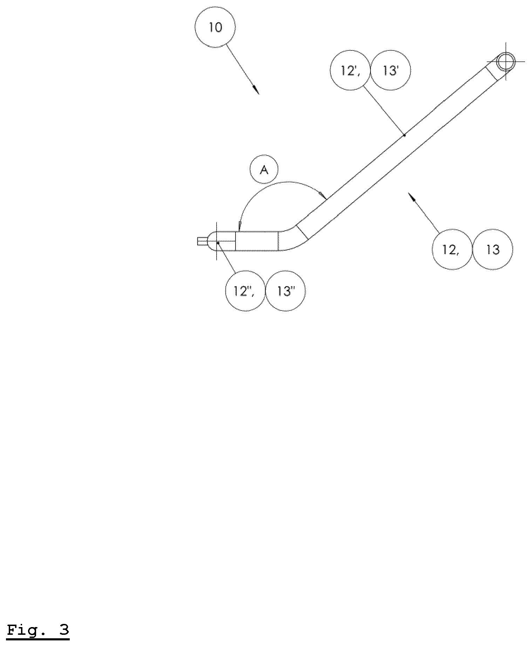

The extent in which the frontal closing plate 3 can be moved distant from the vertical portion 11 of the bar 10 is further promoted by the feature which is most clearly shown in figure 3, and that entails that the upper and lower horizontal portions 12, 13 of the bar 10 each have two sections 12', 12"; 13', 13" that are connected to each other at an angle A. Preferably the angle A is between 139° and 141°.

Further it is shown that the upper and lower horizontal portions 12, 13 are connected centrally to the side 3' of the frontal closing plate 3 that faces the housing 9 when the frontal closing plate 9 is closed.

Within the housing 9 there is a circumferential seal 14 around at least the motherboard 4, wherein in an area outside said seal 14 connectors such as screw connections are provided for tightly connecting the frontal closing plate 3 to the holder 1 which improves the sealing function.

Finally it can be remarked that the vertical portion 11 of the bar 10 is rotatably connected to the housing 9 for the motherboard 4 and touchscreen 5, wherein the vertical portion 11 of the bar 10 is rotatably connected to either a left side or to a right side of the housing 9 for the motherboard 4 and touchscreen 5. Figure 1 shows the situation that the vertical portion 11 of the bar 10 is rotatably connected to the right side of the housing 9 for the motherboard 4 and touchscreen 5. The choice of placing the vertical portion 11 on the left side or the right side of the housing 9 depends on the local circumstances.

Although the invention has been discussed in the foregoing with reference to an exemplary embodiment of the invention, the invention is not restricted to this particular embodiment which can be varied in many ways without departing from the invention.

The discussed exemplary embodiment shall therefore not be used to construe the appended claims strictly in accordance therewith. On the contrary the embodiment is merely intended to explain the wording of the appended claims without intent to limit the claim to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. Unless specifically stated as being "essential" above, none of the various components or the interrelationship thereof are essential to the operation of the invention. Rather, desirable results can be achieved by substituting various components and/or reconfiguration of their relationships with one another.

## Claims

1. Combination of a control device (2) for a door system and a holder (1) for the control device, said control device (2) comprising a motherboard (4) with a CPU and memory, wherein the memory is loaded with a computer program embodying a control algorithm of the door system, and wherein the motherboard (4) is provided with a touchscreen (5) to enable a maintenance engineer access to the CPU and memory for maintenance and for changing operational parameters of the computer program loaded therein, whereby the holder (1) is provided with an openable and closable frontal closing plate (3) having a window (6) closed off with a transparent screen (7) that prevents haptic access to the touchscreen (5) yet enables visual access to the touchscreen (5) showing user information pertaining to the door system when the frontal closing plate (3) is closed, and wherein said frontal closing plate (3) is provided with one or more push buttons (8) enabling user control of the door system.

2. Combination according to claim 1, whereby the frontal closing plate (3) has a hinge connection with a housing (9) for the motherboard (4) and touchscreen (5), which hinge connection comprises a bar (10) with a vertical portion (11) which connects to the housing (9) and connects to upper and lower horizontal portions (12, 13) of said bar (10) that are pivotably connected to the frontal closing plate (3) at a side that faces the housing (9) when the frontal closing plate (3) is closed, so as to enable that the frontal closing plate (3) can be turned to a distant position with respect to the vertical portion (11) of the bar (10) that connects to the housing (9) so as to open the frontal closing plate (3).

3. Combination according to claim 2, whereby the upper and lower horizontal portions (12, 13) are connected centrally to the side of the frontal closing plate (3) that faces the housing (9) when the frontal closing plate is closed.

4. Combination according to claim 2 or 3, whereby the vertical portion (11) of the bar (10) is rotatably connected to the housing (9) for the motherboard (4) and touchscreen (5).

5. Combination according to any one of claims 2-4, whereby the vertical portion of the bar is rotatably connected to a left side or to a right side of the housing for the motherboard (4) and touchscreen (5).

6. Combination according to any one of claims 3-5, whereby the upper and lower horizontal portions (12, 13) of the bar (10) each have two sections (12', 12"; 13', 13") that are connected to each other at an angle (A).

7. Combination according to claim 6, whereby the angle (A) is between 139° and 141°.

8. Combination according to any one of claims 1-7, whereby within the housing (9) there is a circumferential seal (14) around at least the motherboard (4), wherein in an area outside said seal (14) connectors are provided for connecting the frontal closing plate (3) to the holder (1).

9. Combination according to any one of claims 1-8, whereby the holder (1) is equipped with one or more clips (15) that can be provided on the bar (10), which clips (15) are arranged with at least one notch to prevent rotation of the bar (10) so as to maintain an open position of the frontal closing plate (3).

## Patentansprüche

1. Kombination aus einer Steuerungsvorrichtung (2) für ein Türsystem und einer Halterung (1) für die Steuerungsvorrichtung, die genannte Steuerungsvorrichtung (2) umfassend eine Hauptplatine (4) mit einer CPU und einem Speicher, wobei der Speicher mit einem Computerprogramm geladen ist, das einen Steuerungsalgorithmus des Türsystems verkörpert, und wobei die Hauptplatine (4) mit einem Touchscreen (5) versehen ist, um einem Wartungstechniker den Zugriff auf die CPU und den Speicher zur Wartung sowie zur Änderung von Betriebsparametern des darin geladenen Computerprogramms zu ermöglichen, wobei die Halterung (1) mit einer zu öffnenden und zu schließenden vorderen Verschlussplatte (3) versehen ist, die ein Fenster (6) aufweist, das mit einem transparenten Bildschirm (7) verschlossen ist, der den haptischen Zugriff auf den Touchscreen (5) verhindert, jedoch den visuellen Zugriff auf den Touchscreen (5) ermöglicht, der Benutzerinformationen bezüglich des Türsystems anzeigt, wenn die vordere Verschlussplatte (3) geschlossen ist, und wobei die genannte vordere Verschlussplatte (3) mit einer oder mehreren Drucktasten (8) versehen ist, die die Steuerung des Türsystems durch den Benutzer ermöglichen.

2. Kombination nach Anspruch 1, wobei die vordere Verschlussplatte (3) eine Scharnierverbindung mit einem Gehäuse (9) für die Hauptplatine (4) und den Touchscreen (5) aufweist, wobei die Scharnierverbindung eine Stange (10) mit einem vertikalen Abschnitt (11) umfasst, der an dem Gehäuse (9) anschließt und an obere und untere horizontale Abschnitte (12, 13) der genannten Stange (10) anschließt, die schwenkbar mit der vorderen Verschlussplatte (3) an einer Seite verbunden sind, die dem Gehäuse (9) zugewandt ist, wenn die vordere Verschlussplatte (3) geschlossen ist, sodass die vordere Verschlussplatte (3) gegenüber dem vertikalen Abschnitt (11) der Stange (10), der an dem Gehäuse (9) anschließt, in eine distale Position gedreht werden kann, um die vordere Verschlussplatte (3) zu öffnen.

3. Kombination nach Anspruch 2, wobei die oberen und unteren horizontalen Abschnitte (12, 13) mittig mit der Seite der vorderen Verschlussplatte (3) verbunden sind, die dem Gehäuse (9) zugewandt ist, wenn die vordere Verschlussplatte geschlossen ist.

4. Kombination nach einem der Ansprüche 2 oder 3, wobei der vertikale Abschnitt (11) der Stange (10) drehbar mit dem Gehäuse (9) für die Hauptplatine (4) und den Touchscreen (5) verbunden ist.

5. Kombination nach einem der Ansprüche 2 bis 4, wobei der vertikale Abschnitt der Stange drehbar mit einer linken Seite oder einer rechten Seite des Gehäuses für die Hauptplatine (4) und den Touchscreen (5) verbunden ist.

6. Kombination nach einem der Ansprüche 3 bis 5, wobei die oberen und unteren horizontalen Abschnitte (12, 13) der Stange (10) jeweils zwei Abschnitte (12', 12"; 13', 13") aufweisen, die unter einem Winkel (A) miteinander verbunden sind.

7. Kombination nach Anspruch 6, wobei der Winkel (A) zwischen 139° und 141° liegt.

8. Kombination nach einem der Ansprüche 1 bis 7, wobei sich innerhalb des Gehäuses (9) eine umlaufende Dichtung (14) um zumindest die Hauptplatine (4) befindet, wobei in einem Bereich außerhalb der genannten Dichtung (14) Verbindungselemente zum Verbinden der vorderen Verschlussplatte (3) mit der Halterung (1) vorgesehen sind.

9. Kombination nach einem der Ansprüche 1 bis 8, wobei die Halterung (1) mit einem oder mehreren Clips (15) ausgestattet ist, die an der Stange (10) vorgesehen werden können, wobei die Clips (15) mit zumindest einer Kerbe versehen sind, um eine Drehung der Stange (10) zu verhindern, sodass eine Offenstellung der vorderen Verschlussplatte (3) aufrechterhalten werden kann.

## Revendications

1. Combinaison d'un dispositif de commande (2) pour un système de porte et d'un support (1) pour le dispositif de commande, ledit dispositif de commande (2) comprenant une carte mère (4) munie d'un CPU et d'une mémoire, la mémoire étant chargée d'un programme informatique mettant en œuvre un algorithme de commande du système de porte, et la carte mère (4) étant pourvue d'un écran tactile (5) permettant à un technicien de maintenance d'accéder au CPU et à la mémoire pour la maintenance et pour la modification des paramètres opérationnels du programme informatique qui y est chargé, dans lequel le support (1) est pourvu d'une plaque frontale de fermeture (3), ouvrable et refermable, comportant une fenêtre (6) obturée par un écran transparent (7) empêchant un accès haptique à l'écran tactile (5) tout en permettant un accès visuel audit écran tactile (5) affichant des informations utilisateur relatives au système de porte lorsque la plaque frontale de fermeture (3) est fermée, et dans lequel ladite plaque frontale de fermeture (3) est pourvue d'un ou plusieurs boutons-poussoirs (8) permettant un contrôle utilisateur du système de porte.

2. Combinaison selon la revendication 1, dans lequel la plaque frontale de fermeture (3) présente une liaison articulée avec un boîtier (9) pour la carte mère (4) et l'écran tactile (5), ladite liaison articulée comprenant une barre (10) avec une portion verticale (11) reliée au boîtier (9) et reliée à des portions horizontales supérieure et inférieure (12, 13) de ladite barre (10), lesquelles sont articulées à la plaque frontale de fermeture (3) du côté faisant face au boîtier (9) lorsque la plaque frontale de fermeture (3) est fermée, de manière à permettre que la plaque frontale de fermeture (3) puisse être déplacée vers une position éloignée par rapport à la portion verticale (11) de la barre (10) reliée au boîtier (9), afin d'ouvrir la plaque frontale de fermeture (3).

3. Combinaison selon la revendication 2, dans lequel les portions horizontales supérieure et inférieure (12, 13) sont reliées de manière centrale au côté de la plaque frontale de fermeture (3) faisant face au boîtier (9) lorsque la plaque frontale de fermeture est fermée.

4. Combinaison selon l'une quelconque des revendications 2 ou 3, dans lequel la portion verticale (11) de la barre (10) est reliée de manière rotative au boîtier (9) pour la carte mère (4) et l'écran tactile (5).

5. Combinaison selon l'une quelconque des revendications 2 à 4,
dans lequel la portion verticale de la barre est reliée de manière rotative à un côté gauche ou à un côté droit du boîtier pour la carte mère (4) et l'écran tactile (5).

6. Combinaison selon l'une quelconque des revendications 3 à 5,
dans lequel les portions horizontales supérieure et inférieure (12, 13) de la barre (10) comportent chacune deux sections (12', 12" ; 13', 13") reliées l'une à l'autre selon un angle (A).

7. Combinaison selon la revendication 6, dans lequel l'angle (A) est compris entre 139° et 141°.

8. Combinaison selon l'une quelconque des revendications 1 à 7,
dans lequel l'intérieur du boîtier (9) comporte un joint périphérique (14) entourant au moins la carte mère (4), et dans lequel, dans une zone située à l'extérieur dudit joint (14), des connecteurs sont prévus pour relier la plaque frontale de fermeture (3) au support (1).

9. Combinaison selon l'une quelconque des revendications 1 à 8,
dans lequel le support (1) est équipé d'un ou plusieurs clips (15) pouvant être disposés sur la barre (10), lesdits clips (15) étant agencés avec au moins une encoche destinée à empêcher la rotation de la barre (10) afin de maintenir une position ouverte de la plaque frontale de fermeture (3).
